Europäisches Patentamt

European Patent Office

Office européen des brevets

(19)

(11) Veröffentlichungsnummer: **0 006 849**
**B1**

(12) **EUROPÄISCHE PATENTSCHRIFT**

(45) Veröffentlichungstag der Patentschrift:
**04.11.81**

(21) Anmeldenummer: **78900002.3**

(22) Anmeldetag: **01.06.78**

(86) Internationale Anmeldenummer:
**PCT/EP 78/00001**

(87) Internationale Veröffentlichungsnummer:
**WO 78/00003 (07.12.78** Gazette 78/8)

(51) Int. Cl.³: **F 16 B 7/08,** F 16 L 3/12,
**H 02 G 3/24,** D 06 F 55/00 //
**E05C19/06**

(54) **HALTEVORRICHTUNG UND IHRE VERWENDUNG.**

(30) Priorität: **02.06.77 DE 2724903**

(43) Veröffentlichungstag der Anmeldung:
**23.01.80 Patentblatt 80/2**

(45) Bekanntmachung des Hinweises auf die Patenterteilung:
**04.11.81 Patentblatt 81/44**

(84) Benannte Vertragsstaaten:
**CH DE FR GB LU SE**

(56) Entgegenhaltungen:
**DE-A1-1 760 146**
**DE-B1-1 067 336**
**FR-A-1 554 938**
**FR-A1-2 009 406**
**FR-A5-2 084 939**
**FR-A5-2 166 911**
**FR-A1-2 253 935**
**FR-A1-2 344 776**
**GB-A-1 345 011**

(73) Patentinhaber: **Zeller-Plastik Koehn, Gräbner & Co., Auf dem Barl, D-5583 Zell/Mosel (DE)**

(72) Erfinder: **BRACH, Ulrich, Königsbergweg 10, D-5583 Zell/Mosel (DE)**

(74) Vertreter: **SCHROETER, Helmut et al, PATENTANWÄLTE HELMUT SCHROETER KLAUS LEHMANN Bocksgasse 49, D-7070 Schwäbisch Gmünd (DE)**

BUNDESDRUCKEREI BERLIN

## Haltevorrichtung und ihre Verwendung

### Anwendungsgebiet

Die Haltevorrichtung nach der Erfindung ist als Vielzweckklemme im Haushalt, in Werkstätten oder an anderen Orten zu verwenden, überall dort, wo Gegenstände auf einfache Weise und sicher an der Wand, an Möbelstücken oder sonstwo lösbar zu befestigen sind. Sie ersetzt Aufhängehaken u. dgl. und verbessert die Haltefunktion. In einer besonderen Ausführungsform kann sie zum Geschlossenhalten oder Offenhalten von Türen, Fensterflügeln o. dgl. dienen.

### Stand der Technik

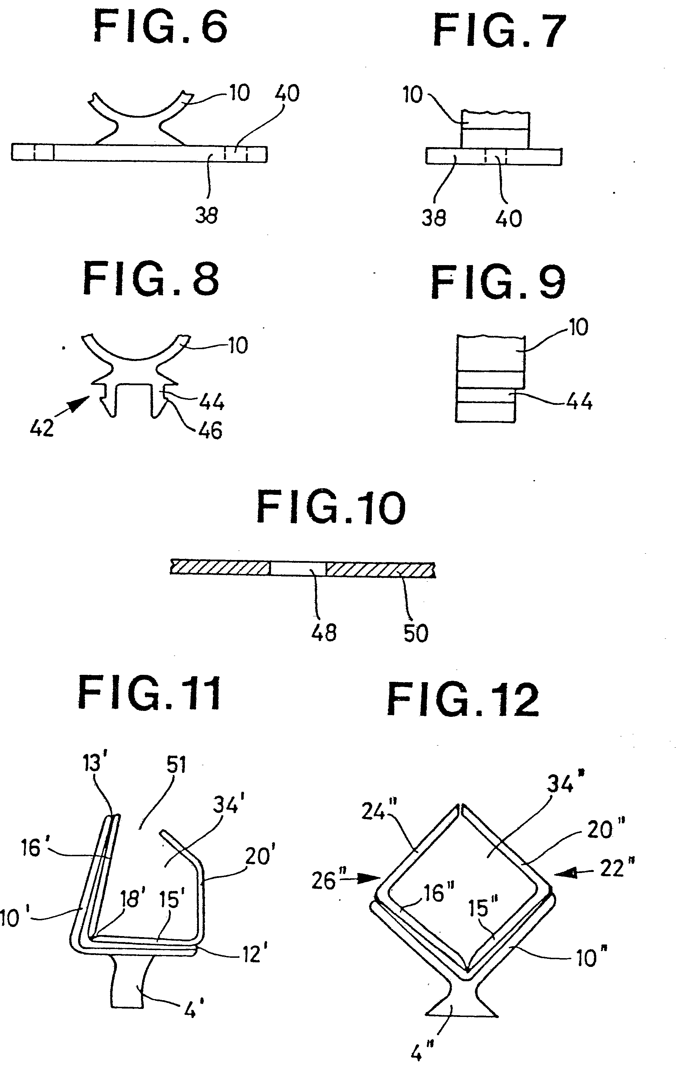

Der Oberbegriff von Anspruch 1 bezieht sich auf eine Haltevorrichtung, wie sie aus der US-A-3 292 223 von Esposito bekannt ist. Dort handelt es sich um eine Wäscheklammer, die ebenfalls drei Filmscharniere hat und sich durch Schnappvorgänge aus der Offenstellung in die Schließstellung und umgekehrt bringen läßt. In einer Ausführungsform nach Fig. 6 bis 8 von Esposito läßt sich einer der Greifer mit einem Auge ausstatten, durch das er und damit die ganze Klammer an dem Längsstab eines Bügels befestigt werden kann, wodurch sich dann eine Haltevorrichtung für Wäschestücke ergibt. Die Wäschestücke werden dann im Schließzustand unter Federkraft gehalten. Eine derartige Ausbildung führt zu Ermüdungserscheinungen des verwendeten Kunststoffmaterials, so daß die Haltevorrichtung nach einiger Zeit nicht mehr in der Lage ist, die Wäschestücke ausreichend fest einzuklemmen.

Die Federvorrichtung der Wäscheklammer nach Esposito hat im wesentlichen die Form eines Hufeisens, dessen Rundung durch einen Steg überbrückt ist. Infolgedessen kann die eigentliche Federwirkung nur von den Schenkeln jenseits des Steges übernommen werden. Das vorhandene Kunststoffmaterial wird somit nicht optimal genutzt, oder es muß für die Erzielung einer beabsichtigten Federwirkung besonders viel Material aufgewandt werden.

Durch die DE-A-1 760 146 ist eine Federklammer aus Kunststoff bekannt geworden, die zwar keine Haltevorrichtung aufweist, im übrigen aber die Merkmale des Oberbegriffs des vorliegenden Anspruchs 1. Diese Federklammer hat eine gekrümmte Biegefeder als Federvorrichtung. Im Schließzustand ragen die Lenker ein kleines Stück in den freien Raum innerhalb der Biegefeder hinein. Die Federklammer steht im Schließzustand unter Spannung. Infolgedessen treten auch hier im Laufe der Zeit Ermüdungserscheinungen des Materials auf, so daß die Federklammer bald nicht mehr gebrauchsfähig ist.

Auf einem gattungsfremden Gebiet, nämlich dem Bau von Scharnieren, ist durch die DE-B-1 817 814 bereits ein abgefedertes Scharnier aus Kunststoff mit drei Gelenkrillen oder Filmscharnieren bekanntgeworden, das eine ähnliche Schnappwirkung hat. Dieses Scharnier ist aber nicht geeignet, einen Greifraum zu umschließen, kann also nicht daher verwendet werden, einen Gegenstand bei entspannter Feder allein durch Formschluß zu haltern.

### Aufgabe, Lösung, Vorteile

Durch die folgende Erfindung soll eine Haltevorrichtung geschaffen werden, die sich mit Hilfe ihres Befestigungsteiles an einem beliebigen Gegenstand anbringen läßt und die im Schließzustand einen Greifraum formschlüssig umgibt, der zur Halterung eines beliebigen Gegenstandes dient. Die Haltevorrichtung soll mit einer Schnappklemme ausgestattet sein, die im Schließzustand wie im Offenzustand normalerweise entspannt ist, so daß keine Ermüdungserscheinungen des Kunststoffmaterials auftreten können. Durch eine besonders günstige Ausgestaltung der Bestandteile der Schnappklemme soll beim Herausbewegen aus der Schließstellung wie aus der Offenstellung die Federkraft sehr steil ansteigen, was zur Folge hat, daß die Schnappklemme nur unter Aufwendung nennenswerter Kräfte aus der einen in die andere Stellung zu bringen ist, und infolgedessen einen Gegenstand in der Schließstellung sicher festhält. Ebenso soll die Kraft, die erforderlich ist, um die Schnappklemme aus ihrer Offenstellung herauszubewegen, eine nennenswerte Größe haben, damit die Klemme auch in der Offenstellung sicher stehen bleibt, so daß zu haltende Gegenstände in einfacher Weise in die Klemme eingedrückt werden können, also sonst keine Manipulation erforderlich ist.

All dies zugleich wird durch die Erfindung gemäß Anspruch 1 erzielt.

Ein relativ großer Greifraum wird dadurch geschaffen, daß die beiden Lenker sich in die offene Seite der Biegefeder einschmiegen. Der hohe Kraftanstieg beim Verlassen der Schließstellung und der Offenstellung wird dadurch erreicht, daß die Summe der Abstände zwischen dem mittleren und den beiden äußeren Filmscharnieren nur geringfügig kleiner ist als die abgewickelte Länge der Biegefeder. Als Folge dieser Maßnahme ergibt sich, daß man zum Halten eines Gegenstandes einer bestimmten Größe gegenüber Esposito mit einem Bruchteil des Materials auskommt und darüberhinaus einen steileren Anstieg der Öffnungskraft erzielt.

Die Haltevorrichtung nach der Erfindung ist nicht nur in Offenstellung, sondern auch in Schließstellung spannungslos, so daß in keiner ihrer Endstellungen Ermüdungserscheinungen auftreten. Bei entsprechender Ausgestaltung des Fortsatzes oder der Fortsätze ihrer Lenker bildet sie in Schließstellung eine geschlossene Öse. Sie kann infolgedessen Gegenstände mit großer Sicherheit haltern, auch bei Erschütterungen, zum Beispiel in Fahrzeugen. Gleichwohl sind die gehalterten Gegenstände mühelos zu entnehmen.

Zum Befestigen eines Gegenstandes kann in einfacher Weise der Gegenstand selbst in die geöffnete Klemme hineingedrückt werden, so daß sie dadurch in ihre Schließstellung schnappt. Zum Entfernen braucht man nur den Gegenstand unter Öffnen der Schnappklemme aus der Haltevorrichtung herauszuziehen. In anderen Anwendungsfällen wird es zweckmäßiger sein, die Schnappklemme von Hand zu schließen und zu öffnen, während man den anzubringenden oder abzunehmenden Gegenstand in der anderen Hand hält.

## Ausgestaltungen der Erfindung

Die Bedingung, daß die Lenker sich in die offene Seite der Biegefeder einschmiegen, läßt sich mit einer Vielzahl von Formen der Lenker und der Feder erfüllen. Die Lenker könnten z. B. ungleiche Längen haben, wenngleich einer Ausführung mit gleichen Längen die größere Bedeutung zukommt. Die Feder kann in Weiterbildung der Erfindung gewinkelt und die Lenker können gerade sein. Auf diese Weise erhält man einen Greifraum von rechteckigem, rhombischem oder quadratischem Querschnitt, der sich zum Unterbringen von Gegenständen entsprechender Querschnittsformen eignet.

Andererseits kann man der Biegefeder und den Lenkern oder Greifern im Querschnitt die Form von Ellipsenbögen, im Grenzfall Kreisbögen, geben, wodurch man einen Greifraum mit elliptischem oder kreisförmigem Querschnitt erhält. Derartige Haltevorrichtungen sind geeignet für die Befestigung der Vielzahl von Gegenständen mit runden Teilen, wie Kochlöffel, Schraubenzieher, Rundfeilen, Schlüsseln sowie von Gegenständen mit länglichem Querschnitt, wie Zahnbürsten, Halbrundfeilen, Eßbeteckteilen u. dgl. mehr.

Während ein Schließen der Haltevorrichtung durch seitlichen Druck mit zwei Fingern ohne weiteres möglich ist, wird das Öffnen durch eine Weiterbildung der Erfindung gemäß Anspruch 6 erleichtert.

Während der Befestigungsteil bei der Esposito-Klemme innerhalb eines Greifers angeordnet ist und dadurch den Greifraum einengt und dazu führt, daß der einzuklemmende Gegenstand nur unter Federspannung gehalten werden kann, wird in Weiterbildung der Erfindung nach Anspruch 7 der Befestigungsteil an einer anderen Stelle der Schnappklemme angebracht, nämlich an der Außenseite der Biegefeder oder eines der Lenker-Fortsätze, wobei die Anbringung an der Außenseite der Biegefeder besondere Bedeutung hat.

Hat der Befestigungsteil die Form einer Platte, so läßt die Haltevorrichtung sich damit anschrauben oder ankleben.

In Weiterbildung der Erfindung nach Anspruch 10 kann der Befestigungsteil auch mehrteilig ausgebildet sein, nämlich eine gesonderte Platte haben, die für sich angeschraubt oder angeklebt werden kann und die über eine Schwalbenschwanzverbindung mit der Schnappklemme vereinigt werden kann. Hierdurch wird die Anbringung der Platte erleichtert und die Möglichkeit geschaffen, eine Schnappklemme abwechselnd an einer von verschiedenen Platten an verschiedenen Orten nur durch Umstecken des Schwalbenschwanzes anzubringen.

In Weiterbildung der Erfindung nach Anspruch 11 kann der Befestigungsteil als Ansatz in Form eines Steckfußes mit Rasten ausgebildet sein. Die Schnappklemme läßt sich dann z. B. in einer Lochplatte an beliebigen Stellen anbringen und umstecken.

Die Haltevorrichtung läßt sich in sehr verschiedenen Größen herstellen, z. B. zur Halterung kleinerer Gegenstände wie Bleistifte, aber auch zur Halterung relativ großer Gegenstände.

Nach einer Weiterbildung der Erfindung gemäß Anspruch 12 enthält die Haltevorrichtung außer der Schnappklemme mit ihrem Befestigungsteil noch ein in den Greifraum passendes Füllstück, das seinerseits mit einer Befestigungsvorrichtung versehen ist. Hierdurch erschließt sich eine Vielzahl weiterer Anwendungsfälle, so z. B. das Aufhalten von Türen, auch Schranktüren, Fensterflügeln u. dgl. Man befestigt z. B. die Schnappklemme an einer Tür, möglichst weit abseits ihrer Achse, und das Füllstück am Boden, einer Wand od. dgl. Ist die Tür geschlossen, so ist die Schnappklemme offen. Wird die Tür mit ihrer Schnappklemme gegen das ortsfest angebrachte Füllstück bewegt, so schließt sich die Klemme von selbst um das Füllstück. Will man die Tür wieder schließen, so muß man einige Kraft aufwenden, um die Schnappklemme aufzureißen, was aber bei dem normalen Schließvorgang der Tür nicht ins Gewicht fällt.

Schnappklemmen mit Füllstück lassen sich z. B. auch zum Aufhängen größerer Gegenstände, wie Platten oder Bildern, an einer Wand verwenden. Es können z. B. zwei bis vier Haltevorrichtungen dieser Art verwendet werden. Bei Bildern erreicht man hierdurch den oft erwünschten Abstand von der Wand, insbesondere nur an der oberen Seite des Bildes und eine verdeckte Anbringung der Befestigungsmittel.

Schließlich soll die Erfindung sich auf zwei besondere Verwendungsarten erstrecken, die sich nicht ohne weiteres aus der Klemme selbst ergeben und für die Schutz im Rahmen der Ansprüche 13 und 14 geltend gemacht wird.

Die Verwendungsart nach Anspruch 13 betrifft das Verlegen von Rohren und Kabeln. Die Haltevorrichtungen lassen sich zunächst unabhängig vom Kabel anbringen, und das Kabel braucht erst nachträglich eingefügt zu werden.

Darüberhinaus läßt das Kabel sich jederzeit durch Öffnen der Schnappklemmen entfernen, durch ein anderes Kabel ersetzen u. dgl., was bei den derzeit üblichen zweiteiligen Kabelschellen nicht, jedenfalls nicht derart einfach, möglich ist.

In Weiterbildung der Erfindung gemäß Anspruch 14 läßt die Haltevorrichtung sich zum Aufhängen von Textilien verwenden, wozu man normalerweise einen Aufhänger benötigt, z. B. bei Handtüchern, Topflappen, Hemden, oder für Kleidungsstücke einen Bügel. Bringt man eine Haltevorrichtung nach der Erfindung an der Wand an, vorzugsweise so, daß die Achse ihres Greifraumes lotrecht verläuft, so kann man in die offene Schnappklemme ein beliebiges Stück eines Handtuches, Topflappens oder Kleidungsstückes einfach eindrücken, wobei die Schnappklemme einen Teil des Stoffes umschließt und festhält. Zum Entnehmen braucht man nur an dem Textilstück zu ziehen, so daß die Schnappklemme sich öffnet, es freigibt und zur Wiederaufnahme bereit ist. Es entfällt vor allem das lästige Suchen nach dem Aufhänger eines Textilstückes. Man kann auf Aufhänger ganz verzichten.

Auf diese Weise lassen sich z. B. auch die Ränder von Gardinen an einer Wand befestigen.

Ausführungsbeispiele der Erfindung werden im folgenden anhand der Zeichnung beschrieben:

Fig. 1 und 2 zeigen eine Haltevorrichtung nach einer ersten Ausführungsform der Erfindung in Stirnansicht bzw. Seitenansicht.

Fig. 1a ist eine Prinzipdarstellung der funktionswesentlichen Längen der Haltevorrichtung.

Fig. 3 zeigt in Stirnansicht die Haltevorrichtung nach Fig. 1 in Schließstellung.

Fig. 4 und 5 zeigen in Seitenansicht bzw. Draufsicht eine zugehörige Fußplatte.

Fig. 6 bis 9 zeigen Befestigungsansätze anderer Art, jeweils in zwei Seitenansichten.

Fig. 10 zeigt ein Stück einer Lochplatte im Schnitt.

Fig. 11 und 12 zeigen in Stirnansicht zwei andere Ausführungsformen von Haltevorrichtungen.

Fig. 13 und 14 zeigen in Seitenansicht bzw. Draufsicht eine Haltevorrichtung mit Füllstück zum Offenhalten von Türflügeln od. dgl.


## Bester Weg zur Ausführung der Erfindung

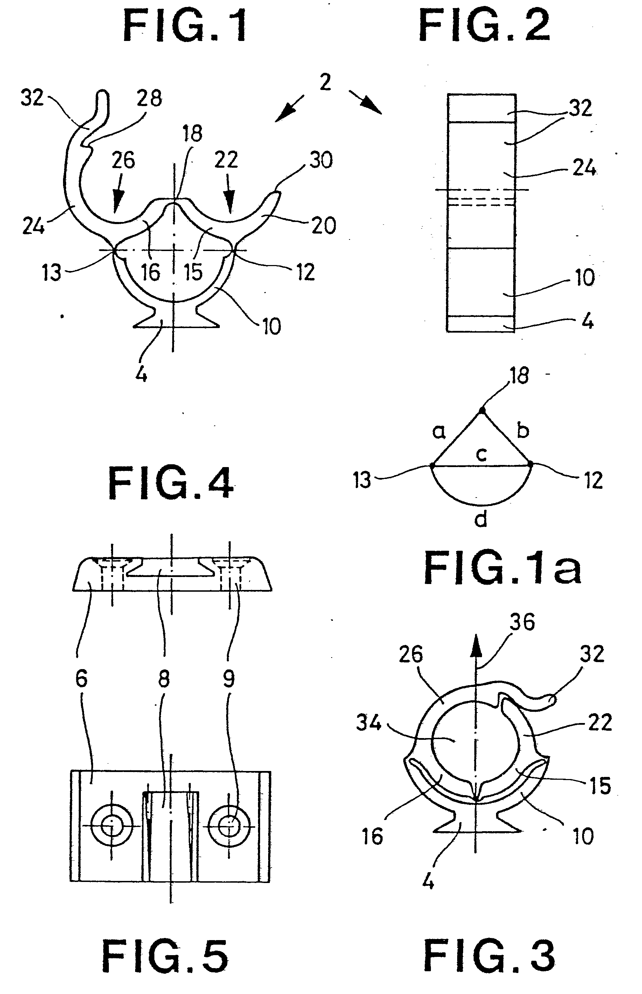

Die Haltevorrichtung nach Fig. 1 bis 5 besteht aus einer als ganzes mit 2 bezeichneten Schnappklemme, mit einem Befestigungsansatz 4 in Gestalt eines Schwalbenschwanzfußes, sowie einer Fußplatte 6 mit Befestigungslöchern 9 und einer Schwalbenschwanznut 8, in die sich der Schwalbenschwanzfuß einschieben läßt.

Die Schnappklemme 2 ist einteilig aus Polypropylen gespritzt und hat durchgehend gleichbleibende Querschnittsform. Die Schnappklemme hat eine Biegefeder 10, die im Querschnitt annähernd halbkreisförmig ist und die den Befestigungsansatz 4 trägt. Die Biegefeder 10 endet in zwei Filmscharnieren 12 und 13, durch die sie einteilig mit zwei Lenkern 15 bzw. 16 verbunden ist. Diese Lenker sind miteinander durch ein weiteres Filmscharnier 18 verbunden. Als Lenker 15, 16 werden hier nur die Teile zwischen den Filmscharnieren 12 und 18 bzw. 13 und 18 bezeichnet. Der Lenker 15 hat einen Fortsatz 20. Mit diesem zusammen bildet er einen Greifer 22, der im Querschnitt kreisbogenförmig ist. Der Lenker 16 hat einen Fortsatz 24, mit dem er zusammen einen ebenfalls kreisbogenförmigen Greifer 26 bildet. Der Fortsatz 24 endet in einem Anschlag 28 für das Ende 30 des Fortsatzes 20. Der Fortsatz 24 ist verlängert durch einen Griffansatz 32, den man zum Öffnen der Schnappklemme verwenden kann.

Die beiden Greifer 22 und 26 umgeben im Schließzustand (Fig. 3) den Greifraum 34. Der Greifer 22 erstreckt sich längs eines Bogens von weniger als 180° und der Greifer 26 längs eines Bogens von mehr als 180°.

Soll die Schnappklemme 2 einen Gegenstand festhalten, der mit seiner Griffstelle in den Greifraum 34 paßt, so wird der Gegenstand achsparallel gegen das Filmscharnier 18 gedrückt, so daß die beiden Lenker 15 und 16 gegen die Biegefeder 10 gedrückt werden. Diese erweitert sich, bis schließlich ihre größte Weite und damit der Totpunkt der Schnappklemme erreicht ist. Danach drückt die Biegefeder die beiden Lenker 15, 16 und damit die Greifer 22, 26 in die Schließstellung nach Fig. 3, in der der Gegenstand festgehalten wird. Zum Öffnen kann einfach der Gegenstand aus der Schnappklemme herausgerissen werden, und zwar in Richtung des Pfeiles 36 in Fig. 3, wodurch die Schnappklemme wieder in die Offenstellung nach Fig. 1 zurückschnappt. Stattdessen kann die Schnappklemme an dem Griffansatz 32 geöffnet und der Gegenstand entnommen werden.

Aus Fig. 3 erkennt man, daß sich die Lenker 15, 16 in Schließstellung gut in die Biegefeder 10 einschmiegen. Fig. 1a zeigt schematisch die für die Funktion wesentlichen Längen zwischen den Filmscharnieren 12, 13 und 18. Die Längen a, b und c entsprechen den geradlinigen Verbindungsstrecken zwischen den Filmscharnieren, und der Bogen d entspricht der Länge der Biegefeder 10. Die Prinzipdarstellung der Fig. 1a gilt aber analog auch für alle anderen Ausführungsformen von Schnappklemmen, die im folgenden behandelt werden.

Die erste Bedingung für einen ins Gewicht fallenden Schnappeffekt liegt darin, daß die Summe der Strecken a und b größer, wenn möglich wesentlich größer ist als die Strecke c. Dann muß nämlich die Biegefeder zur Überwindung des Totpunktes um ein erhebliches Stück aufgebogen werden.

Darüberhinaus wird durch die Erfindung gelehrt, daß die beiden Lenker 15, 16 sich möglichst gut in die offene Seite der Biegefeder 10 einschmiegen. Dies ist dann der Fall, wenn die Summe der Strecken a und b möglichst wenig kleiner ist als die Bogenlänge d.

Wie Fig. 6 und 7 zeigen, kann die Schnappklemme einteilig mit einem Befestigungsansatz 38 in Gestalt einer Fußplatte gespritzt sein. Die Fußplatte kann mit einem Selbstkleber beschichtet sein und versehen mit einer Abdeckfolie in den Handel gebracht werden. Stattdessen kann die Fußplatte auch Befestigungslöcher 40 haben.

Weitere Ausführungsformen der Erfindung

Fig. 8 und 9 zeigen einen Befestigungsansatz 42, der ebenfalls einteilig mit der Schnappklemme gespritzt ist und zwei Steckstifte 44 mit nach außen weisenden Rastvorsprüngen 46 hat. Hiermit läßt die Schnappklemme sich in einem Rechteckloch 48 einer Platte 50 durch Einstecken anbringen, wobei die Rastvorsprünge 46 die Schnappklemme sicher halten. Schnappklemmen lassen sich auf diese Weise in Leisten mit einer Reihe von Löchern 48 oder in Platten anbringen, die über ihre ganze Fläche derartige Löcher aufweisen, so daß man sie schnell anbringen, aber auch umstecken kann, um beliebige Werkzeuge, Haushaltsgeräte, Toilettenartikel oder sonstiges daran anzubringen.

Die Schnappklemmen können auch andere Formen als die in Fig. 1 bis 3 dargestellte haben. So zeigt Fig. 11 eine Biegefeder 10', die nicht bogenförmig sondern gewinkelt ist. Der Befestigungsansatz 4' setzt nicht am Scheitelpunkt der Biegefeder, sondern an ihrem einen Arm an. Beide Arme haben unterschiedliche Längen. Dementsprechend haben die Lenker 15' und 16' unterschiedliche Längen, die aber so gewählt sind, daß die Lenker sich gut in den Winkel der Biegefeder einschmiegen. Nur einer der Lenker, nämlich 15', hat einen Fortsatz 20', der allein ausreicht, im Schließzustand einen Gegenstand formschlüssig zu halten. Es verbleibt eine Lücke 51, die dann zweckmäßig ist, wenn ein Teil des zu haltenden Gegenstandes aus der Klemme hinausragen soll, z. B. dann, wenn Textilien zu halten sind, die Biegefeder 10' im Schließzustand aber nicht oder nur in ganz geringfügigem Maß unter Spannung stehen soll. Ist die Lücke 50 nicht erwünscht, so kann der Fortsatz 20' verlängert werden oder ein Fortsatz am Lenker 16' angebracht werden. Das Einschmiegen und die beiden oben genannten Abstandsbedingungen sind auch hier erfüllt.

Fig. 12 zeigt eine Schnappklemme, deren Greifraum 34'' einen quadratischen Querschnitt hat. Die Arme der Biegefeder 10'' schließen demgemäß etwa einen rechten Winkel ein. Ebenso bilden die Fortsätze 20'' und 24'' mit den Lenkern 15'' und 16'' rechte Winkel. Schnappklemmen dieser Art eignen sich besonders gut zur Halterung von im Querschnitt quadratischen Gegenständen oder zur Anbringung an Rohren oder Stäben von quadratischem Querschnitt.

Statt der dargestellten Formen können die Schnappklemmen so ausgebildet sein, daß sie Greifräume von elliptischem, rechteckigem oder rhombischem Querschnitt umgreifen.

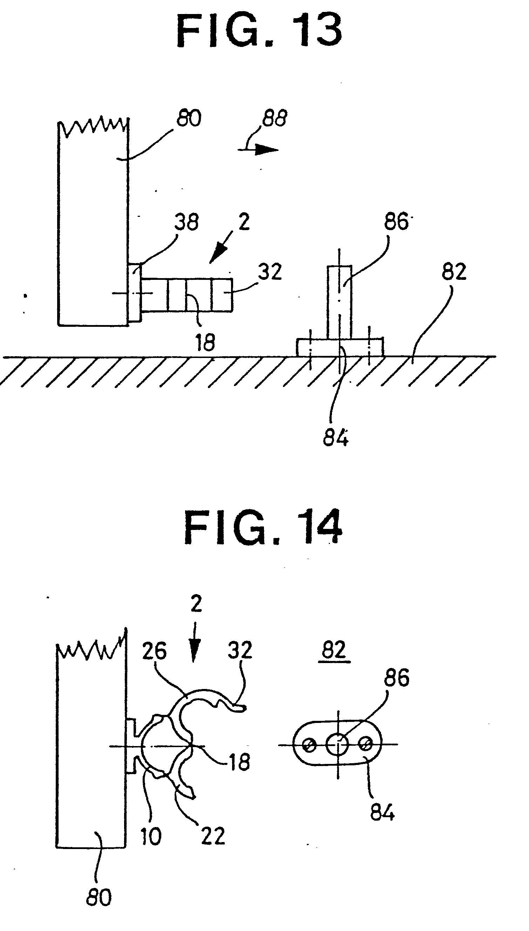

Fig. 13 und 14 zeigen die Verwendung einer Haltevorrichtung nach Fig. 1 bis 3, jedoch mit einem Befestigungsansatz 38 in Gestalt einer Fußplatte nach Fig. 6 und 7, zum Halten eines Türflügels 80 in Offenstellung. Die Schnappklemme 2 ist mit Hilfe ihres Befestigungsansatzes 38 an das untere Ende eines Türflügels 80 geschraubt. Die Blickrichtung in Fig. 18 und 19 ist in Richtung der Türebene. Auf den Fußboden 82 wird mit Hilfe einer Befestigungsplatte 84 ein Füllstück 86 in Gestalt eines zylindrischen Stiftes geschraubt. In der dargestellten Lage ist die Schnappklemme 2 geöffnet. Wird der Türflügel in Richtung des Pfeiles 88 bewegt, so drückt die Schnappklemme mit ihrem Filmscharnier 18 schließlich gegen das Füllstück 86, schließt sich um dieses herum und hält den Türflügel offen. Zum Entfernen der Tür vom Füllstück 86 braucht sie nur mit etwas Kraft fortbewegt zu werden, wodurch sich die Schnappklemme 2 öffnet. Es empfiehlt sich, eine Schnappklemme mit Griffansatz 32 zu verwenden, damit sie von Hand geöffnet werden kann, falls sie einmal, entfernt vom Füllstück 86, unbeabsichtigt geschlossen wurde.

**Patentansprüche**

1. Haltevorrichtung, die eine mit einem Befestigungsteil versehene, einteilig aus Kunststoff, insbesondere Polypropylen, hergestellte Schnappklemme aufweist, wobei die Schnappklemme eine Biegefedervorrichtung mit zwei gegeneinander federnden Schenkeln (Federschenkel) und zwei miteinander und mit den Enden der Federschenkel durch je ein Filmscharnier verbundene Lenker hat und mindestens einer der Lenker einen Fortsatz aufweist, der mit dem Lenker zusammen einen Greifer für einen zu haltenden Gegenstand bildet und wobei die Summe der Abstände zwischen dem mittleren und den beiden äußeren Filmscharnieren bei entspannter Federvorrichtung größer ist als der Abstand zwischen den beiden äußeren Filmscharnieren, gekennzeichnet durch folgende Merkmale:

a) die Federvorrichtung ist eine einzige gekrümmte oder gewinkelte Biegefeder (10; 10' usw.);

b) die Federvorrichtung ist im Schließzustand (Fig. 3, 12) spannungslos;

c) die Lenker (15, 16 usw.) schmiegen sich im Schließzustand in die offene Seite der Biegefeder derart ein, daß die Summe (a + b) der Abstände zwischen dem mittleren (18) und den beiden äußeren Filmscharnieren (12, 13) nur wenig kleiner ist als die abgewickelte Länge (d) der Biegefeder (10 usw.).

2. Haltevorrichtung nach Anspruch 1, dadurch gekennzeichnet, daß die Biegefeder (10'; 10") gewinkelt und die Lenker (15', 16'; 15", 16") gerade sind (Fig. 12).

3. Haltevorrichtung nach Anspruch 2, dadurch gekennzeichnet, daß beide Greifer (22", 26") oder ein Lenker (16") und ein Greifer (22") gemeinsam im Schließzustand einen Greifraum (34") von quadratischem, rechteckigem oder rhombischem Querschnitt einschließen (Fig. 12).

4. Haltevorrichtung nach Anspruch 1, dadurch gekennzeichnet, daß in einem durch die Filmscharniere (12, 13, 18) gelegten Querschnitt die Biegefeder (10) und die Lenker (15, 16) die Form von Kreisbögen oder Ellipsenbögen haben (Fig. 1 und 3).

5. Haltevorrichtung nach Anspruch 4, dadurch gekennzeichnet, daß die Greifer (22, 26) gemeinsam oder ein Lenker (15) und ein Greifer (26) gemeinsam im Schließzustand einen Greifraum (34) von elliptischem oder kreisförmigem Querschnitt einschließen (Fig. 3).

6. Haltevorrichtung nach einem der vorangehenden Ansprüche, dadurch gekennzeichnet, daß mindestens einer der Greifer (26) einen Griffansatz (32) hat, der im Schließzustand außerhalb des freien Endes des anderen Greifers (22) liegt (Fig. 1).

7. Haltevorrichtung nach einem der vorangehenden Ansprüche, dadurch gekennzeichnet, daß der Befestigungsteil ein an der Biegefeder oder einem der Fortsätze vorgesehener Ansatz (4; 38; 42; 4'; 4") ist (Fig. 1, 6, 8, 11, 12).

8. Haltevorrichtung nach Anspruch 7, dadurch gekennzeichnet, daß der Befestigungsansatz (38; 52) eine Platte ist (Fig. 6).

9. Haltevorrichtung nach Anspruch 8, dadurch gekennzeichnet, daß die Platte (38) an ihrer der Haltevorrichtung abgekehrten Seite mit einem Selbstkleber beschichtet ist.

10. Haltevorrichtung nach Anspruch 7, dadurch gekennzeichnet, daß der Befestigungsansatz ein Schwalbenschwanzfuß ist, der in eine Schwalbenschwanznut (8) einer gesonderten Befestigungsplatte (6) paßt (Fig. 1 bis 5).

11. Haltevorrichtung nach Anspruch 7, dadurch gekennzeichnet, daß der Befestigungsansatz (42) ein Steckfuß mit Rasten (46) ist (Fig. 8).

12. Haltevorrichtung nach einem der Ansprüche 1 bis 6, dadurch gekennzeichnet, daß sie ein in den Greifraum (34) der Schnappklemme (2) passendes, gesondertes Füllstück (86) hat, das mit einer Befestigungsvorrichtung (84) versehen ist (Fig. 13, 14).

13. Verwendung einer Haltevorrichtung nach einem der Ansprüche 1 bis 11 zur Verlegung von Kabeln, Drähten oder Rohren.

14. Verwendung einer Haltevorrichtung nach einem der Ansprüche 1 bis 11 zur Halterung von aus textilen Stoffen hergestellten Gegenständen.

## Claims

1. Holding apparatus which has a snap-clip provided with a fastening portion, the apparatus being made in one piece from synthetic material, in particular polypropylene, wherein the snap-clip has a bending spring arrangement with two legs (spring legs) springing towards each other and two connecting arms interconnected with each other and each connected with the ends of the spring legs by a film hinge and at least one of the arms has a continuation which forms a gripper of an object to be held and wherein the sum of the distances between the middle and both outer film hinges in a relaxed spring arrangement is greater than the distance between both outer film hinges characterised by the following features.

(a) the spring arrangement is a curved or angled bending spring (10; 10' etc.);

(b) the spring arrangement is without tension in the shut condition (Fig. 3, 12);

(c) the arms (15, 16 etc.) fit in the open side of the bending spring in the shut condition in such a way that the sum (a+b) of the distances between the middle (18) and both outer film hinges (12, 13) is only a little smaller than the developed length (d) of the bending springs (10 etc).

2. Holding apparatus according to claim 1 characterised in that bending spring (10'; 10") is angled and the arms (15', 16'; 15", 16") are straight (Fig. 12).

3. Holding apparatus according to claim 2 characterised in that both grippers (22", 26") or one arm (16") and one gripper (22") together define a gripping space (34") of square, rectangular or rhombic section in the shut condition (Fig. 12).

4. Holding apparatus according to claim 1 characterised in that the bending spring (10) and the arms (15, 16) have the form of circular arcs or elliptical arcs in a cross-section passing through the film hinges (12, 13, 18) (Fig. 1 and 3).

5. Holding apparatus according to claim 4 characterised in that the grippers (22, 26) together or an arm (15) and a gripper (26) together enclose in the shut condition a gripping space (34) of elliptical or circular cross-section (Fig. 3).

6. Holding apparatus according to one of the preceding claims characterised in that at least one of the grippers (26) has a gripper lug (32) which is outside the free end of the other gripper (32) in the shut condition (Fig. 1).

7. Holding apparatus according to one of the preceding claims characterised in that the fastening portion is a lug (4; 38; 42; 4'; 4") provided on the bending spring or one of the continuations (Fig. 1, 6, 8, 11, 12).

8. Holding apparatus according to claim 7 characterised in that the fastening lug (38; 52) is a plate (Fig. 6).

9. Holding apparatus according to claim 8 characterised in that the plate (38) is covered with a self-adhesive layer on the side facing away from the holding apparatus.

10. Holding apparatus according to claim 7 characterised in that the fastening lug is a dovetailed foot which fits into a dovetailed groove (8) of a separate securing plate (6) (Fig. 1 to 5).

11. Holding apparatus according to claim 7 characterised in that the fastening lug (42) is a plug-in foot with catches (46) (Fig. 8).

12. Holding apparatus according to one of claims 1 to 6 characterised in that it has a separate fill-in piece (86) fitting in the gripping space (34) of the snap-clip (2) which piece is provided with a fastening arrangement (84).

13. Use of a holding apparatus according to one of claims 1 to 11 for the laying of cables, wires or tubes.

14. Use of a holding apparatus according to one of claims 1 to 11 for holding objects made from textile materials.

**Revendications**

1. Dispositif de retenue comportant une pince à ressort, pourvue d'une partie destinée à sa fixation, faite d'une seule pièce en matière plastique, en particulier polypropylène, la pince présentant un dispositif à ressort de flexion à deux branches agissant élastiquement (branche du ressort) l'une contre l'autre et deux parties de guidage (15, 16) reliées l'une à l'autre et aux extrémités des branches du ressort (10) par une jointure mince faisant charnière (12, 13, 18) et l'une au moins des parties de guidage ayant un prolongement (24) qui constitue avec elle un crochet pour retenir un objet, la somme des distances entre la charnière médiane (18) et les deux charnières extérieures (12, 13) étant supérieure, le dispositif à ressort détendu, à la distance entre les deux charnières extérieures, caractérisé par les particularités suivantes:

a) le dispositif à ressort est un ressort de flexion incurvé ou coudé (10, 10' etc . . .),

b) en position de fermeture (Fig. 3, 12) le dispositif à ressort est détendu,

c) en position de fermeture, les parties de guidage (15, 16 etc . . .) pénètrent dans l'écartement ou côté ouvert entre les branches du ressort de flexion, de sorte que la somme (a+b) des distances entre la charnière médiane (18) et les deux charnières extérieures (12, 13) n'est que légèrement inférieure à la longueur développée (d) du ressort de flexion (10, etc . . .).

2. Dispositif de retenue suivant la revendication 1, caractérisé en ce que ressort de flexion (10', 10'') est coudé et les parties de guidage (15', 16'; 15'', 16'') rectiligne; (Fig. 12)

3. Dispositif de retenue suivant la revendication 2, caractérisé en ce que les deux crochets (22'', 26''), ou une partie de guidage (16'') et un crochet (22'') circonscrivent ensemble en position de fermeture un espace de préhension (34'') de section transversale carrée, rectangulaire, ou rhomboïdale (Fig. 12).

4. Dispositif de retenue suivant la revendication 1, caractérisé en ce que, dans l'une des sections transversales déterminées par les charnières minces (12, 13, 18), le ressort de flexion (10) et les parties de guidage (15, 16) sont en forme d'arcs de cercle ou d'arcs d'ellipse (Fig. 1 et 3).

5. Dispositif de retenue suivant la revendication 4, caractérisé en ce qu'en position de fermeture, les crochets (22, 26) ou une partie de guidage (15) et un chrochet (26) circonscrivent ensemble un espace de préhension (34) de section transversale elliptique, ou circulaire (Fig. 3).

6. Dispositif de retenue suivant l'une quelconque des revendications qui précèdent, caracté-. risé en ce que l'un moins des crochets (26) présente un prolongement (32), qui, en position de fermeture, se trouve en-dehors de l'extrémité libre de l'autre crochet (22) (Fig. 1).

7. Dispositif de retenue suivant l'une quelconque des revendications qui précèdent, caractérisé en ce que la partie servant à sa fixation est constituée par un épaulement (4, 38, 42, 4', 4'') prévu sur le ressort de flexion ou sur l'un des prolongements (Fig. 1, 6, 8, 11, 12).

8. Dispositif de retenue suivant la revendication 7, caractérisé en ce que l'épaulement prévu pour sa fixation est une plaque (38, 52) (Fig. 6).

9. Dispositif de retenue suivant la revendication 8, caractérisé en ce que la plaque (38) est recouverte d'un adhésif sur sa face opposée au dispositif.

10. Dispositif de retenue suivant la revendication 7, caractérisé en ce que l'épaulement destiné à sa fixation a une section transversale en queue d'aronde, qui s'ajuste dans une rainure (8) de section correspondante en queue d'aronde d'une plaque (6) séparée (Fig. 1 à 5).

11. Dispositif de retenue suivant la revendication 7, caractérisé en ce que l'épaulement (42) servant à sa fixation comporte des fiches à crans d'arrêt (46) (Fig. 8).

12. Dispositif de retenue suivant l'une quelconque des revendications 1 à 6, caractérisé en ce qu'il comparte un taquet (86) séparé, ajusté dans l'espace de préhension (34) de la pince à ressort (2) et pourvu d'un dispositif de fixation (84) (Fig. 13, 14).

13. Utilisation d'un dispositif de retenue suivant l'une quelconque des revendications 1 à 11 pour la pose de câbles, fils ou tubes.

14. Utilisation d'un dispositif de retenue suivant l'une quelconque des revendications 1 à 11 pour retenir des objets en matière textilies.

# FIG.1

# FIG.2

# FIG.1a

# FIG.4

# FIG.5

# FIG.3

# FIG.6

# FIG.7

# FIG.8

# FIG.9

# FIG.10

# FIG.11

# FIG.12

11

# FIG. 13

# FIG. 14